# EUROPÄISCHE PATENTSCHRIFT

(11) **EP 0 658 563 B1**
(45) Veröffentlichungstag und Bekanntmachung des Hinweises auf die Patenterteilung: **01.09.1999**
(21) Anmeldenummer: 94118412.9
(22) Anmeldetag: 23.11.1994
(51) Int. Cl.: C07F 9/40

(54) **Verfahren zur Herstellung von Vinylphosphonsäuredialkylestern**
Process for preparing dialkyl esters of vinylphosphonic acid
Procédé de préparation de dialkyl esters d'acide vinylphosphonique

(30) Priorität: 14.12.1993 DE 4342570
(43) Veröffentlichungstag der Anmeldung: 21.06.1995
(73) Patentinhaber: Clariant GmbH, 65929 Frankfurt am Main (DE)
(72) Erfinder: Roscher, Dr. Günter, D-65779 Kelkheim (DE); Kaufmann, Dr. Wolf-Dietmar, D-61476 Kronberg (DE); Laufwitz, Dl. Bernd, D-65812 Bad Soden (DE)

(56) Entgegenhaltungen:
- EP-A- 0 032 663
- EP-A- 0 065 739
- EP-A- 0 281 122
- EP-A- 0 456 049

## Beschreibung

Vinylphosphonsäuredialkylester sind als Vorprodukte für die Herstellung reiner Vinylphosphonsäure sowie als Monomere zur Mischpolymerisation für die Herstellung Von Klebstoffen oder flammfesten Kunststoffen von Bedeutung. Sie sind auf unterschiedlichen Wegen herstellbar (DE-OS 30 01 894, EP 281 122). Nach einem in EP 281 122 beschriebenen Verfahren wird dabei Acetoxyethanphosphonsäureester in Flüssigphase im Vakuum thermisch gespalten zu Essigsäure und Vinylphosphonsäuredialkylester, wobei Essigsäure und Vinylphosphonsäuredialkylester aus dem Reaktionsgemisch herausdestillieren. Die Handhabung wird so beschrieben, daß in einem Reaktionskolben (mit aufgesetzter Destillationskolonne, Vakuumanschluß, Destillatvorlage, Vorlage für Sumpfausschleusung) z. B. Vinylphosphonsäure (als Katalysator) enthaltender Acetoxyethanphosphonsäuredialkylester zugetropft wird. Entstehende Essigsäure und Vinylphosphonsäuredialkylester werden abdestilliert. Zur Erhaltung eines Gleichgewichtszustandes bei kontinuierlicher Arbeitsweise wird entsprechend der Hochsiederbildung auch Sumpfmaterial abgenommen. Die angegebenen Ausbeuten werden mit 80 % vom umgesetzten Acetoxyethanphosphonsäuredialkylester angegeben.

Es hat sich gezeigt, daß mit der beschriebenen Anordnung beim Übergehen vom Labormaßstab auf technische Größenordnung die Ausbeuten deutlich geringer werden, so daß mit der beschriebenen Anordnung aus wirtschaftlichen Gründen wegen der zu geringen Ausbeute eine bestimmte Ansatzgröße nicht überschritten werden kann.

Es bestand somit ein großer Bedarf nach einem Verfahren bei dem eine Vergrößerung in den technischen Maßstab problemlos möglich ist und das Vinylphosphonsäuredialkylester in hoher Ausbeute zugänglich macht.

Diese Aufgabe wird gelöst durch ein Verfahren zur kontinuierlichen Herstellung von Vinylphosphonsäuredialkylestern unter Verwendung von Katalysatoren bei Temperaturen von 150 bis 270°C durch Spaltung von Acetoxyethanphosphonsäuredialkylestern bei einem Druck von 5 bis 500 mbar in Berührung mit einem flüssigen katalytisch wirkenden Medium unter Abzug der entstehenden Vinylphosphonsäuredialkylester und anderer flüchtiger Reaktionprodukte als Dämpfe, dadurch gekennzeichnet, daß das flüssige Medium im Zwangsumlauf über einen Verdampfer geführt wird, wobei entsprechend dem Abdestillieren von Vinylphosphonsäuredialkylestern und anderen flüchtigen Verbindungen frischer Acetoxyethanphosphonsäuredialkylester, gegebenenfalls mit Katalysator versetzt, nachgeführt und zur Aufrechterhaltung konstanter Bedingungen als Nebenprodukt gebildetes nichtflüchtiges Material aus dem Flüssigkeitskreislauf abgezogen wird.

Für die Durchführung des Verfahrens sind unterschiedliche Ausführungsformen möglich. So kann z. B. die Kreislaufführung des Katalysators über einen normalen Röhrentauscher mit Seitengefäß zur Standhaltung und an den Verdampfer angeschlossenes Brüdenrohr mit Kondensator und Vakuumanschluß erfolgen. Auch andere Versuchsanordnungen sind möglich. So hat es sich in vielen Fällen bewährt, die Kreislaufführung des Katalysators über den Verbund eines Rührgefäßes mit einem Dünnschichtverdampfer oder Fallstromverdampfer durchzuführen.

Als katalytisch wirkende Medien eignen sich die gleichen, die auch in der DE-OS 31 20 437 und EP 281 122 genannt werden, und zwar sowohl saure als auch basische. Als saure Medien eignen sich z. B. Schwefelsäure, Phosphorsäure, halogenhaltige Carbonsäuren wie Di- und Trichloressigsäure sowie Trifluoressigsäure,aromatische Sulfonsäuren wie Benzol- und p-Toluolsulfonsäure, Vinylphosphonsäure, vor allem aber Produkte, die aus den bei der vorliegenden Reaktion im Sumpf anfallenden, also höhersiedenden Nebenprodukten durch thermische Behandlung mit Wasser erhalten werden, wobei die Wasserbehandlung z. B. durch Kochen für die Dauer von 5 Minuten bis 2 Stunden erfolgen kann. Als basische Medien lassen sich z. B. tertiäre aliphatische und aromatische Amine und Phosphane (früher als Phosphine bezeichnet) verwenden, wie sie ebenfalls in großer Zahl in der DE-OS 31 20 437 genannt sind.

Die als Reaktionsprodukt anfallenden Dämpfe bestehen aus gebildetem Vinylphosphonsäuredialkylester, gebildeter Essigsäure sowie nicht umgesetztem Acetoxyethanphosphonsäuredialkylester, der entsprechend seinem Partialdruck bei den Reaktionsbedingungen mit verdampft. Die Dämpfe werden zweckmäßig in eine Destillationskolonne eingeleitet, in der Essigsäure und Vinylphosphonsäuredialkylester über den Kopf der Kolonne destillieren und der Sumpfablauf zurückläuft ins Reaktionssystem. Wenn die Destillationskolonne keinen Abtriebsteil mit zusätzlicher Beheizung hat, enthält dieser Sumpfrücklauf neben nicht umgesetztem Acetoxyethanphosphonsäuredialkylester noch Vinylphosphonsäuredialkylester und Essigsäure. Wenn die nachgeschaltete Destillationskolonne mit einem Abtriebsteil mit zusätzlicher Sumpfbeheizung versehen ist, kann der ins Reaktionssystem zurückgeführte Sumpf praktisch frei von Vinylphosphonsäuredialkylester erhalten werden. Der Katalysatorkreislauf kann unterschiedlich geführt werden. Er kann vom Rührkessel über den Dünnschichtverdampfer zurück zum Rührkessel im Gleichstrom mit den Brüden gefahren werden, so daß die verdampften Spaltprodukte über den Gasraum des Kessels in die nachgeschaltete Kolonne eingeleitet werden. Günstiger ist es jedoch, die verdampften Spaltprodukte im Gegenstrom oben aus dem Dünnschichtverdampfer abzuziehen und anschließend mit dem verdampften Material aus dem Rührkessel gemeinsam in die nachgeschaltete Destillationskolonne einzuleiten. Auch ein Einleiten dieser Brüdenströme in zwei getrennte Destillationskolonnen ist möglich. Der Rührkessel allein ohne den Katalysatorkreislauf über den Dünnschichtverdampfer bringt wie beschrieben nur schlechte Ausbeuten.

Mit einem Katalysatorkreislauf über den Dünnschichtverdampfer allein ohne den Rührkessel werden nur sehr kleine Durchsätze erreicht.

Die folgenden Beispiele sollen das Verfahren erläutern ohne es darauf zu beschränken.

### Vergleichsbeispiele:

a) Beispiel 1 (entspricht Beispiel 2 aus EP 281 122)
In einem 1 l-Rührkolben mit Abzugsvorrichtung für den Sumpf und aufgesetzter Destillationskolonne (Lichte Weite 25 mm, Länge 0,7 m, Füllung mit 6 mm Raschig-Ringen) mit automatischem Rücklaufteiler, Destillationsvorlage, nachgeschalteter Kältefalle (Tiefkühlung mit Trockeneis) und angeschlossener Vakuumpumpe werden 50 g rohe Vinylphosphonsäure vorgelegt. Nach Aufheizen auf 210°C bei einem Druck von 10 mbar wird eine Mischung von 95 Gew.-% Acetoxyethanphosphonsäuredimethylester und 5 Gew.-% Vinylphosphonsäure in einer Menge von ca. 140 g/h eindosiert. Nach Einstellen konstanter Bedingungen wird der Stand des Sumpfes im Reaktionskolben durch kontinuierliches Ablassen von Sumpfmaterial in ein ebenfalls evakuiertes Gefäß konstant gehalten. Das Rücklaufverhältnis in der Kolonne wird auf 1 eingestellt.
Innerhalb von 40 Stunden werden 5500 g eingesetzt. Man erhält 3200 g Destillat, 1020 g Produkt aus der Kältefalle und 1225 g Material, das aus dem Sumpf abgelassen wird.
Das Sumpfmaterial kann nach Aufkochen mit Wasser und Abdestillieren des Wassers wieder als Katalysator für die Spaltung der Einsatzmischung zugesetzt werden. Das Destillat enthält 89 Gew.-% Vinylphosphonsäuredimethylester und 1,1 Gew.-% Methylacetat. Der Rest ist im wesentlichen Essigsäure.
Das in der Kältefalle enthaltene Produkt enthält 6 Gew.-% Vinylphosphonsäuredimethylester, ca. 4 Gew.-% Methanol und 3 Gew.-% Essigsäure; der Rest ist im wesentlichen Methylacetat. Bezogen auf eingesetzten Acetoxyethanphosphonsäuredimethylester beträgt die Ausbeute an Vinylphosphonsäuredimethylester 80 %.
b) Rührgefäßvergrößerung
Die Versuchsanordnung ist analog dem Vergleichsbeispiel a). Das Rührgefäß besteht aus einem 60 l Rührkessel mit Außenmantel. Der Außenmantel wird zur Kesselbeheizung mit Wärmeübertragungsöl im Zwangsumlauf betrieben.
Auf den Kessel aufgesetzt ist eine Destillationskolonne aus Glas. Die Kolonne ist 2 m lang und hat einen Innendurchmesser von 225 mm. Sie ist gefüllt mit 12 mm Glasspiralen. Die Kolonne hat einen automatischen Rücklaufteiler und einen mit Kältesole -10°C betriebenen Kondensator, Destillatvorlage und Vakuumanschluß. Das Vakuumaggregat hat auf der Druckseite einen mit Sole betriebenen Kondensator mit Abscheider. Der Rührkessel ist im unteren Ablaßstutzen mit einer Pumpe zum Herauspumpen von Sumpfmaterial verbunden.
In den Rührkessel vorgelegt werden als Katalysator für die Spaltung 10 kg Vinylphosphonsäure. Das Gesamtsystem wird auf Vakuum gebracht, Druck 10 mbar. Anschließend wird der Rührkessel auf 195°C aufgeheizt und pro Stunde 10 kg Acetoxyethanphosphonsäuredimethylester, der als Spaltkatalysator 3% Vinylphosphonsäure enthält, zum Rührgefäß gefahren. Nach Erreichen konstanter Verhältnisse sind folgende Bedingungen eingestellt: Kesselinnentemperatur 195 °C Druck 10 mbar. Rücklaufverhältnis Destillationskolonne 1,5, Kopftemperatur 67°C.

| | |
|---|---|
| Sumpfabzug: | 3,87 kg/h bestehend aus einem Vielstoffgemisch enthaltend u. a. Phosphorsäure, Polyphosphorsäuren, Vinylphosphonsäuremonomethylester, Phosphonsäureanhydride |
| Destillat: | 3,6kg/h |
| Vinylphosphonsäuredimethylester | 70 % |
| Essigsäure | 27 % |
| Methylacetat | 3 % |
| Kondensat Druckseite Vakuumaggregat: | 2,43 kg/h |
| Methylacetat | 86,5 % |
| Vinylphosphonsäuredimethylester | 4 % |
| Essigsäure | 7,4 % |
| Dimethylether | 2 % |

Die Ausbeute an Vinylphosphonsäuredimethylester, bezogen auf eingesetzten Acetoxyethanphosphonsäuredimethylester beträgt 40 %.
b₁) Temperaturänderung:
   Bei gleichen Zulaufmengen tritt bis zu einer Temperatur von 210°C im Rührkessel praktisch keine Änderung in Menge und Zusammensetzung der Einzelströme ein. Bei Absenken der Temperatur ist der Sumpfaustrag unterhalb 190°C stark, steigend.
b₂) Mengendurchsatz:
   Eine Erhöhung der Zulaufmenge bei den beschriebenen Bedingungen erhöht bevorzugt den Sumpfablauf ohne merkliche Erhöhung des Vinylphosphonsäuredimethylesters im Destillat.

### Beispiel 2

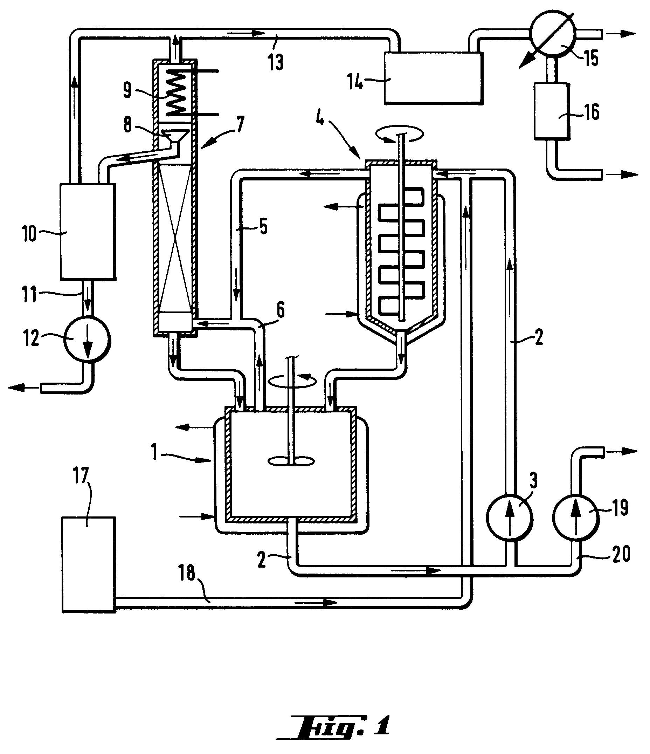

Die Versuchsanordnung ist in Abbildung 1 dargestellt.

Handhabung: Aus dem auf einer Waage angebrachten Rührgefäß (1) wird über eine Leitung (2) mit Pumpe (3) das den Spaltkatalysator enthaltende Sumpfmaterial über den Dünnschichtverdampfer (4) mit Sumpfablauf in den Rührkessel (1) im Kreislauf gepumpt. Sowohl die Dämpfe aus dem Dünnschichtverdampfer (4), über Leitung (5) als auch die Dämpfe aus dem Rührkessel (1) über Leitung (6) werden in die Kolonne (7), automatischer Rücklaufteiler (8), mit Kältesole betriebener Kondensator (9) eingeleitet. Das Destillat aus Kolonne 7 fließt in Vorlage (10) und wird über Leitung (11) mittels Pumpe (12) kontinuierlich abgepumpt. Der Rücklauf aus Kolonne (7) fließt zurück in Rührkessel (1). Kondensator (9) und Vorlage (10) sind über Leitung (13) mit dem Vakuumaggregat (14) verbunden. Die Druckseite von Vakuumaggregat (14) führt auf den mit Kältesole betriebenen Kondensator (15) mit Flüssigkeitsabscheider (16). Frischer Acetoxyethanphosphonsäuredialkylester wird aus Vorlage (17) über Leitung (18) in den Katalysatorumpump Leitung (2) eingesaugt. Aus dem Katalysatorkreislauf wird mit Pumpe (19) über Leitung (20) anfallendes Hochsiedermaterial abgezogen, um den Stand im Rührkessel (1) konstant zu halten.

### Beispiel 2 a:

In Rührkessel (1) vorgelegt werden 10 kg Vinylphosphonsäure. Nach Aufheizen auf 100°C wird mit Pumpe (3) der Umlauf (Menge 120 l/h) angestellt und die Temperatur im Dünnschichtverdampfer und Rührkessel (1) auf 195°C hochgezogen. Der Druck im System ist mit dem Vakuumaggregat (14) auf 10 mbar eingestellt. Aus Gefäß (17) werden über Leitung (18) 10 kg/h Acetoxyethanphosphonsäuredimethylester der 3 % Vinylphosphonsäure enthält in Leitung (2) zum Dünnschichtverdampfer gefahren. Das Rücklaufverhältnis in Kolonne (7) ist auf 2 eingestellt. Der Sumpfinhalt in Rührkessel (1) wird mit Pumpe (19) konstant gehalten. Nach Einstellung stationärer Bedingungen ergeben sich die folgenden Bedingungen.

### Druck 10 bis 12 mbar

| Temperaturen: | |
|---|---|
| Kessel (1) | 195°C |
| Ablauf Dünnschichtverdampfer (4) | 193 bis 197°C |
| Temperatur im Warmübertragungsöl | 225°C |
| Kopftemperatur Kolonne (7) | 68 bis 70°C |
| Rücklaufverhältnis Kolonne (7) | 2 |

| Mengen: | |
|---|---|
| Destillataustrag über Pumpe (12) | |
| 7 kg/h | |
| Vinylphosphonsäuredimethylester | 73 % |
| Essigsäure | 25 % |
| Methylacetat u. Unbekannte | Rest |
| Kondensat, Druckseite Vakuumaggregat (14) | |
| Abscheider (16) | |
| 1,1 kg/h | |
| Methylacetat | 77 % |
| Essigsäure | 15 % |
| Dimethylether | 5 % |
| Vinylphosphonsäuredimethylester | 3 % |
| Sumpfaustrag Pumpe (19) | |
| 1,8 kg/h | |
| Vinylphosphonsäure | 17 % |
| Vinylphosphonsäuremonomethylester | 30 % |
| Phosphorsäure, Polyphosphorsäuren | 53 % |
| Phosphonsäureanhydride | |

Die Ausbeute an Vinylphosphonsäuredimethylester, bezogen auf umgesetzten Acetoxyethanphosphonsäuredimethylester, beträgt 76 %.

### Beispiel 2 b:

Mengensteigerung: Die Zulaufmenge für Acetoxyethanphosphonsäuredimethylester kann bei entsprechender Erhöhung der Temperatur des Wärmübertragungsöls erhöht werden.

Bei einer Öltemperatur von 240°C lassen sich bis zu einer Zulaufmenge von 25 kg/h Acetoxyethanphosphonsäuredimethylester (3 % Vinylphosphonsäure) 195°C im Rührkessel (1) aufrechterhalten. Bei einem Rücklaufverhältnis von 1,5 in Kolonne (7) erhöhen sich die Einzelströme im Vergleich zu Beispiel 1 entsprechend der Erhöhung des Zulaufs von Acetoxyethanphosphonsäuredimethylester. Wird die Zulaufmenge weiter erhöht, lassen sich auch durch weitere Erhöhung der Temperatur des Wärmeübertragungsöls im Rührkessel (1) - und Dünnschichtverdampfer (4) - keine konstanten Bedingungen mehr einstellen.

### Beispiel 3:

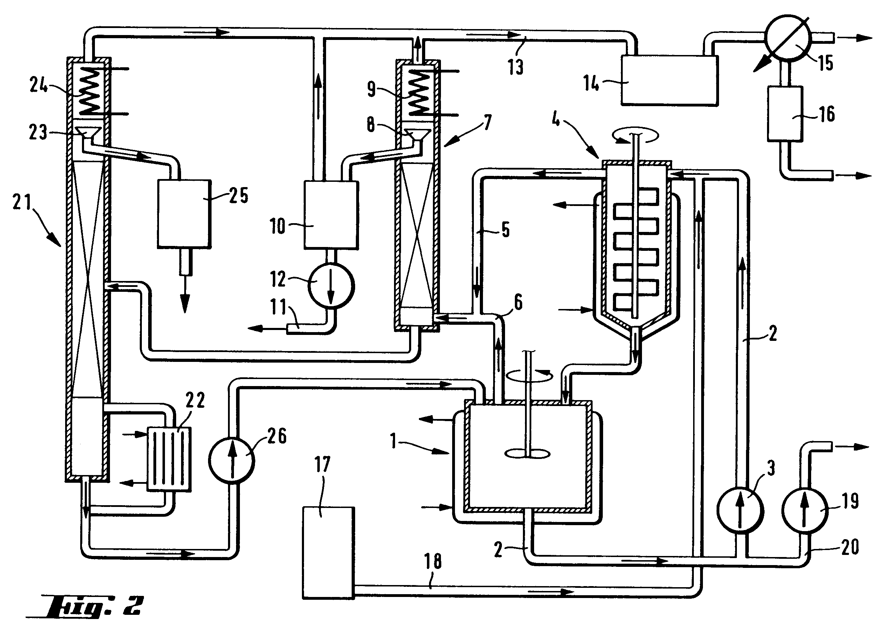

Die Versuchsanordnung ist in Abbildung 2 dargestellt. Die Versuchsanordnung ist wie in Beispiel 1. Der Sumpfablauf von Kolonne (7) fließt jedoch nicht zurück zum Rührkessel (1), sondern wird in eine zweite Kolonne (21) eingeleitet. Der Zulauf ist in der Mitte, Umlaufverdampfer (22), Rücklaufteiler (23) Kondensator (24), Vorlage 25, Vakuumanschluß an Vakuumaggregat (14).

Zur Konstanthaltung des Sumpfstandes von Kolonne (21) wird mit Pumpe (26) Sumpfmaterial zurückgepumpt auf Kessel (1). Mit dieser Anordnung läßt sich der Durchsatz gegenüber Beispiel 1 a bis auf 33 kg/h Acetoxyethanphosphonsäuredimethylesterzulauf steigern. Die sich stationäre einstellenden Bedingungen sind wie folgt:

### Druck 10 mbar

| Temperaturen | |
|---|---|
| Kessel (1) | 195°C |
| Ablauf Dünnschichtverdampfer (4) | 193 bis 198°C |
| Kopftemperatur Kolonne (7) | 68 bis 70°C |
| Kopftemperatur Kolonne (21) | 71°C |
| Sumpftemperatur Kolonne (21) | 140°C |
| Zulauf aus Gefäß (17) | |
| Acetoxyethanphosphonsäuredimethylester | 32 kg/h |
| Vinylphosphonsäure | 1 kg/h |
| Rücklaufverhältnis Kolonne (7) | 1,5 |
| Rücklaufverhältnis Kolonne (21) | 1 |
| Destillat Kolonne (7) Austrag Pumpe (12) | 18,1 kg/h |
| Vinylphosphonsäuredimethylester | 66,2 % |
| Essigsäure | 33,7 % |
| Methylacetat, Sonstige | 0,1 % |
| Destillat Kolonne (21) | 5,9 kg/h |
| Vinylphosphonsäuredimethylester | 85 % |
| Essigsäure | 15 % |
| Kondensat Druckseite Vakuumaggregat (14) | 3,7 kg/h |
| Methylacetat | 82 % |
| Essigsäure | 14 % |
| Vinylphosphonsäuredimethylester | 0,3 % |
| Dimethylether | 0,1 % |
| Sumpfaustrag Kessel (1), Pumpe (19) | 5,2 kg/h |
| Vinylphosphonsäure | 19 % |
| Vinylphosphonsäuremonomethylester | 27 % |
| Polymere Phosphonsäure und Polyphosphorsäuren | 54 % |
| Rückführung Sumpf Kolonne (21) | 21 kg/h |
| nach Kessel (1) | |
| Acetoxyethanphosphonsäuredimethylester | 90 % |
| als Nebel mitgerissene Sumpfanteile | 10 % |
| Kessel (1) | |

Die Ausbeute an Vinylphosphonsäuredimethylester bezogen auf eingesetzten Acetoxyethanphosphonsäuredimethylester beträgt 77 %.

## Patentansprüche

1. Verfahren zur kontinuierlichen Herstellung von Vinylphosphonsäuredialkylestern unter Verwendung von Katalysatoren bei Temperaturen von 150 bis 270°C durch Spaltung von Acetoxyethanphosphonsäuredialkylestern bei einem Druck von 5 bis 500 mbar in Berührung mit einem flüssigen katalytisch wirkenden Medium unter Abzug der entstehenden Vinylphosphonsäuredialkylester und anderer flüchtiger Reaktionsprodukte als Dämpfe, dadurch gekennzeichnet, daß das flüssige Medium im Zwangsumlauf über einen Verdampfer geführt wird, wobei entsprechend dem Abdestillieren von Vinylphosphonsäuredialkylestern und anderen flüchtigen Verbindungen frischer Acetoxyethanphosphonsäuredialkylester gegebenenfalls mit Katalysator versetzt nachgeführt und zur Aufrechterhaltung konstanter Bedingungen als Nebenprodukt gebildetes nicht flüchtiges Material aus dem Flüssigkeitskreislauf abgezogen wird.

2. Verfahren nach Anspruch 1, dadurch gekennzeichnet, daß das beschriebene Reaktionssystem, über das das Flüssigkeitsgemisch im Zwangsumlauf gefördert wird, aus der Kombination von einem Rührkessel mit einem Dünnschichtverdampfer oder Fallstromverdampfer besteht.

3. Verfahren nach Anspruch 1 und 2, dadurch gekennzeichnet, daß die dampfförmig anfallenden Spaltprodukte zusammen mit mitverdampfendem nicht umgesetzten Acetoxyethanphosphonsäuredialkylester in eine Destillationskolonne ohne zusätzliche Beheizung eingeleitet werden, an deren Kopf der wesentliche Anteil gebildeter Vinylphosphonsäuredialkylester, gebildeter Essigsäure und anderer leichtflüchtiger Komponenten abgenommen und der wesentliche Anteil mitverdampfter Acetoxyetanphosphonsäuredialkylester vom unteren Ende der Kolonne zurückgeführt wird in den Spaltungskreislauf.

4. Verfahren nach Anspruch 1 bis 3, dadurch gekennzeichnet, daß die in Anspruch 3 beschriebene Kolonne noch einen zusätzlichen Abtriebsteil mit Sumpfbeheizung enthält, in der eine weitergehende Abtrennung des gebildeten Vinylphosphonsäuredialkylesters erfolgt, so daß ein Rücklauf vom Sumpf dieser Kolonne ins Reaktionssystem erfolgt, der nur noch geringe Mengen Vinylphosphonsäuredialkylester enthält.

5. Verfahren nach Anspruch 1 bis 4, dadurch gekennzeichnet, daß die Dämpfe aus Dünnschichtverdampfer und Rührkessel im Gegenstrom zum Katalysatorkreislauf am oberen Ende des Dünnschichtverdampfers abgenommen werden.

6. Verfahren nach Anspruch 1 bis 5, dadurch gekennzeichnet, daß die anfallenden Dämpfe sowohl aus dem Dünnschichtverdampfer und aus dem Rührkessel getrennt abgezogen werden.

7. Verfahren nach Anspruch 6, dadurch gekennzeichnet, daß die getrennt abgezogenen Dämpfe vor der weiteren destillativen Aufarbeitung wieder zusammengeführt werden.

8. Verfahren nach mindestens einem der Ansprüche 1 bis 7, dadurch gekennzeichnet, daß als katalytisch wirkende Medien saure oder basische, insbesondere saure, bevorzugt ein Produkt, das bei der Reaktion als höhersiedendes Nebenprodukt gebildet und danach in der Hitze mit Wasser behandelt worden ist, verwendet werden.

## Claims

1. A process for the continuous preparation of dialkyl vinylphosphonates using catalysts at temperatures of from 150 to 270°C by dissociation of dialkyl acetoxyethanephosphonates at a pressure of from 5 to 500 mbar in contact with a liquid, catalytically active medium while drawing off the dialkyl vinyl-phosphonates formed and other volatile reaction products as vapors, which comprises conveying the liquid medium in forced circulation via an evaporator while feeding in fresh dialkyl acetoxyethanephosphonate, if desired admixed with catalyst, corresponding to the distillation of dialkyl vinylphosphonates and other volatile compounds, and drawing off non-volatile material formed as byproduct from the liquid circuit to maintain constant conditions.

2. The process as claimed in claim 1, wherein the reaction system described, via which the liquid mixture is conveyed in forced circulation, comprises a combination of a stirred reactor with a thin-film evaporator or downdraft evaporator.

3. The process as claimed in claim 1 or 2, wherein the dissociation products obtained in the form of vapor are, together with vaporizing, unreacted dialkyl acetoxyethanephosphonate, introduced into a distillation column without additional heating, at the top of which the major part of dialkyl vinylphosphonates formed, acetic acid formed and other readily volatile components is taken off and the major part of dialkyl acetoxyethanephosphonates also vaporized is recirculated from the bottom end of the column into the dissociation circuit.

4. The process as claimed in any of claims 1 to 3, wherein the column described in claim 3 contains an additional stripper section having liquid-phase heating in which continuing separation of the dialkyl vinylphosphonate formed occurs, so that the resulting return flow from the bottom of this column into the reaction system contains only small remaining amounts of dialkyl vinylphosphonate.

5. The process as claimed in any of claims 1 to 4, wherein the vapors from the thin-film evaporator and stirred reactor are taken off in countercurrent to the circulation of catalyst at the upper end of the thin-film evaporator.

6. The process as claimed in any of claims 1 to 5, wherein the vapors formed are separately drawn off both from the thin-film evaporator and from the stirred reactor.

7. The process as claimed in claim 6, wherein the vapors separately drawn off are recombined before further workup by distillation.

8. The process as claimed in at least one of claims 1 to 7, wherein the catalytically active media used are acid or basic, in particular acid, preferably a product which has been formed in the reaction as relatively high-boiling byproduct and has then been treated hot with water.

## Revendications

1. Procédé pour la préparation en continu d'esters dialkyliques de l'acide vinylphosphonique en utilisant des catalyseurs à des températures de 150 à 270°C par clivage d'esters dialkyliques de l'acide acétoxyéthanephosphonique à une pression de 5 à 500 mbar en contact avec un milieu liquide à activité catalytique avec extraction des esters dialkyliques l'acide vinylphosphonique formé et autres produits de réaction volatils sous forme de vapeurs, caractérisé en ce que le milieu liquide est envoyé en circulation forcée sur un évaporateur, de l'ester dialkylique de l'acide acétoxyéthanephosphonique frais, éventuellement additionné de catalyseur, étant encore introduit en fonction de l'extraction par distillation des esters dialkyliques de l'acide vinylphosphonique et autres composés de réaction volatils et, pour maintenir des conditions constantes, la matière non volatile formée en tant que produit secondaire étant extraite du circuit de liquide.

2. Procédé selon la revendication 1, caractérisé en ce que le système réactionnel décrit sur lequel le mélange de liquides est transporté en circulation forcée, est constitué de la combinaison d'une cuve à agitation avec un évaporateur à couche mince ou évaporateur à tirage par en-bas.

3. Procédé selon la revendication 1 et 2, caractérisé en ce que les produits de clivage formés sous forme de vapeur sont introduits, ensemble avec l'ester dialkylique de l'acide acétoxyéthanephosphonique n'ayant pas réagi, coévaporé, dans une colonne de distillation sans chauffage supplémentaire, à la tête de laquelle la portion principale d'ester dialkylique de l'acide vinylphosphonique formé, d'acide acétique formé et d'autres composants facilement volatils est prélevée et la portion principale d'ester dialkylique de l'acide acétoxyéthanephosphonique coévaporé est renvoyée de l'extrémité inférieure de la colonne dans le circuit de clivage.

4. Procédé selon la revendication 1 à 3, caractérisé en ce que la colonne décrite dans la revendication 3 contient encore une autre partie de rectification avec chauffage du pied de colonne, dans laquelle une séparation poussée de l'ester dialkylique de l'acide vinylphosphonique formé a lieu, de sorte qu'a lieu un retour de la matière du pied de cette colonne dans le système réactionnel, lequel ne contient encore que de faibles quantités d'ester dialkylique de l'acide vinylphosphonique.

5. Procédé selon la revendication 1 à 4, caractérisé en ce que les vapeurs provenant de l'évaporateur à couche mince et de la cuve à agitation sont prélévées à contre-courant du circuit de catalyseur à l'extrémité supérieure de l'évaporateur à couche mince.

6. Procédé selon la revendication 1 à 5, caractérisé en ce que les vapeurs formées provenant tant de l'évaporateur à couche mince que de la cuve à agitation sont extraites séparément.

7. Procédé selon la revendication 6, caractérisé en ce que les vapeurs extraites séparément sont de nouveau introduites ensemble avant le traitement supplémentaire par distillation.

8. procédé selon au moins une des revendications 1 à 7, caractérisé en ce qu'en tant que milieux à activité catalytique on utilise des milieux acides ou basiques, en particulier acides, de préférence un produit qui a été formé lors de la réaction en tant que produit secondaire à point d'ébullition très élevé et qui a été ensuite traité à chaud avec de l'eau.
